# EUROPÄISCHE PATENTSCHRIFT

(11) **EP 4 041 585 B1**
(45) Veröffentlichungstag und Bekanntmachung des Hinweises auf die Patenterteilung: **27.12.2023**
(21) Anmeldenummer: 20797556.6
(22) Anmeldetag: 06.10.2020
(51) Int. Cl.: B60K 15/04

(54) **TANKSTUTZENVERSCHLUSS FÜR EINEN KRAFTSTOFFTANK**
TANK FILLER NECK CLOSURE FOR A FUEL TANK
FERMETURE DE COL DE REMPLISSAGE DE RÉSERVOIR POUR UN RÉSERVOIR DE CARBURANT

(30) Priorität: 09.10.2019 DE 202019105565 U
(43) Veröffentlichungstag der Anmeldung: 17.08.2022
(73) Patentinhaber: Gerdes GmbH, 50170 Kerpen (DE)
(72) Erfinder: STADELBACHER, Marc, 51399 Burscheid (DE); HIRSCH, Christian, 50259 Pulheim (DE); JUNKER, Walter, 52249 Eschweiler (DE)
(74) Vertreter: Patentanwälte Buschhoff Hennicke Althaus
(86) Internationale Anmeldenummer: PCT/IB2020/059361
(87) Internationale Veröffentlichungsnummer: WO 2021/070043

(56) Entgegenhaltungen:
- EP-A1- 2 502 772
- EP-B1- 2 502 772
- DE-A1-102011 078 339
- DE-U1-202017 100 770
- US-A1- 2012 024 422

## Beschreibung

Die Erfindung betrifft einen Tankstutzenverschluss für einen Kraftstofftank, mit einem in einem Rohrstutzen eines Tankfüllrohrs angeordneten Fehlbetankungsschutz, der eine Verschlussklappe sowie einen mittels eines Zapfventilrohrs für Kraftstoff entriegelbaren Verriegelungsmechanismus für die Verschlussklappe aufweist, wobei der Verriegelungsmechanismus umfasst:
- einen quer zur Axialrichtung des Rohrstutzens aus einer Verriegelungsstellung in eine Entriegelungsstellung verstellbaren Freigabeschieber, der einen Durchlass für das Zapfventilrohr hin zu der in dessen Einsteckrichtung dahinter gelegenen Verschlussklappe aufweist;
- mindestens eine in der Axialrichtung des Rohrstutzens von dem Zapfventilrohr betätigbare Sicherungseinrichtung, die in einer ersten, vom Zapfventilrohr unbetätigten Position den Freigabeschieber in seiner Verriegelungsstellung arretiert und in einer zweiten, vom Zapfventilrohr in der Axialrichtung betätigten Position den Freigabeschieber zu dessen Verstellung in die Entriegelungsstellung freigibt,
wobei die Sicherungseinrichtung wenigstens ein Rastelement mit einer Anschlagfläche aufweist, die sich im Wesentlichen quer zur Einsteckrichtung in Radialrichtung in den Durchlass im Freigabeschieber erstreckt und die an den Querschnitt von mindestens zwei verschieden dicken, zugelassenen Zapfventilrohren angepasst ist, wobei ein von einem freien Ende der in den Durchlass ragenden Anschlagfläche und einem inneren Umfangsbereich des Durchlasses definierter Durchlassquerschnitt in der Verriegelungsposition des Freigabeschiebers wenig kleiner ist als der Querschnitt des dünnsten zugelassenen Zapfventilrohrs und der Durchlassquerschnitt in der Entriegelungsposition mindestens so groß ist wie der Querschnitt des größten zugelassenen Zapfventilrohrs.

An Tankstellen werden unterschiedliche Kraftstoffsorten (Benzin, Diesel) zur Betankung von Kraftfahrzeugen angeboten. Um eine Fehlbetankung eines Fahrzeugs mit falschem Kraftstoff zu verhindern, unterscheiden sich die Zapfventile für die verschiedenen Kraftstoffsorten im Durchmesser ihres Zapfventilrohrs, das zur Betankung in den Rohrstutzen am zugänglichen Ende des Tankfüllrohrs für den Kraftstofftank gesteckt werden muss, um das betreffende Fahrzeug zu betanken. So haben die Zapfventile für Dieselkraftstoff generell einen größeren Rohrdurchmesser als solche für Ottokraftstoff. Eine Fehlbetankung von Fahrzeugen mit Ottomotor lässt sich somit grundsätzlich dadurch vermeiden, dass der Einsteckquerschnitt des Rohrstutzens für einen Benzin-Kraftstofftank an den kleineren Durchmesser eines Benzin-Zapfventils angepasst und in jedem Fall kleiner als der Querschnitt eines Diesel-Zapfventils bemessen wird, so dass sich ein solches nicht in das Tankfüllrohr des zur Aufnahme von Ottokraftstoff bestimmten Kraftstofftanks einführen lässt. Um zu vermeiden, dass umgekehrt ein im Durchmesser kleineres Benzin-Zapfventil in den größer bemessenen Rohrstutzen für einen Dieseltank eingeführt und somit ein Dieselfahrzeug in unerwünschter Weise mit Benzin betankt werden kann, ist es bekannt, im Rohrstutzen eine Fehlbetankungsschutz vorzusehen. Ein Beispiel hierfür ist in der EP 2 562 024 A1 offenbart.

Bei dem bekannten Verschluss ist der Querschnitt des Durchlasses im Freigabeschieber an den Querschnitt eines einzigen, zulässigen Zapfventilrohrs angepasst, dergestalt, dass sich auf der einen Seite ein Zapfventilrohr mit größerem als dem zulässigen Durchmesser gar nicht erst in den Durchlass einführen lässt und auf der anderen Seite eine Entriegelung des Fehlbetankungsschutzes mit einem Zapfventilrohr mit kleinerem Durchmesser nicht möglich ist. Erreicht wird dies mit Hilfe eines in Einsteckrichtung des Zapfventilrohrs hinter dem Freigabeschieber angeordneten Sicherungsstifts, der in einer ersten Position unter Wirkung einer Druckfeder in eine Riegelaufnahme an dem Freigabeschieber einfasst und dessen Querverschiebung damit verhindert, und der von dem in den Durchlass im Freigabeschieber eingeführten Zapfventilrohr entgegen der Federwirkung in eine zweite Position verstellt wird und dabei aus der Riegelaufnahme gedrückt wird. Der Schieber kann dann von dem Zapfventilrohr quer verschoben werden, indem dieses mit seinem Außenumfang gegen den Rand des Durchlasses gedrückt wird. Wenn versucht wird, den Verschluss mit einem Zapfventil mit zu kleinem Rohrdurchmesser zu öffnen, scheitert dies daran, dass es nicht möglich ist, mit dem dünneren Rohr zugleich den Sicherungsstift aus der Riegelaufnahme herauszudrücken und den Freigabeschieber seitlich zu verschieben, um die darunter gelegene Verschlussklappe zu entriegeln.
Diese bekannte Vorrichtung hat sich als vorteilhaft und zuverlässig erwiesen. Allerdings eignet sie sich nicht für Kraftstofftanks, bei denen die Möglichkeit gegeben sein soll, zu ihrer Befüllung Zapfventile mit unterschiedlichen Durchmessern zu gestatten. Konkret stellt sich eine derartige Anforderung bei großvolumigen Diesel-Kraftstofftanks für Lastkraftwagen, die bevorzugt mit sogenannten LKW-Diesel-Zapfventilen mit großem Querschnitt betankt werden sollen, die eine schnelle Befüllung gestatten, bei denen aber auch die Betankung mittels eines PKW-Diesel-Zapfventils möglich sein soll, wenn an der angefahrenen Tankstelle keine Zapfmöglichkeit mit einem durchflussstärkeren LKW-Zapfventil angeboten wird.

Die DE 20 2017 100770 U1 offenbart einen Fehlbetankungsschutz mit einem zu seiner Deaktivierung vorgesehenen Werkzeug. Der Fehlbetankungsschutz weist ein seitlich verschiebbares Element auf, das als Blockierelement dient und das von dem Rohr einer einzuführenden Zapfpistole verdrängt wird, wobei dieses zunächst die Verriegelung des Blockiermittels aufheben muss. Mit dem dort beschriebenen Werkzeug kann kostengünstig und auf einfache Weise der Fehlbetankungsschutz insbesondere auch dauerhaft deaktiviert werden.

Aufgabe der Erfindung ist es, einen Tankstutzenverschluss mit Fehlbetankungsschutz zu schaffen, der von Zapfventilen mit wenigstens zwei verschiedenen Durchmessern betätigt werden kann, wobei die Betätigung mittels eines Zapfventils mit einem noch kleineren als dem kleinsten, zulässigen Durchmesser, also insbesondere eine Betätigung mittels eines Benzin-Zapfventils zuverlässig vermieden wird.

Diese Aufgabe wird mit der Erfindung dadurch gelöst, dass die Anschlagfläche eines jeden Rastelements so beschaffen ist, dass sie in der Verriegelungsstellung sowohl von einem Zapfventilrohr mit einem größeren erlaubten Rohrdurchmesser als auch einem solchen mit einem kleinsten erlaubten Rohrdurchmesser kontaktierbar ist, wobei die Anschlagfläche(n) und der Freigabeschieber wenigstens am Beginn von dessen Verstellweg aus der Verriegelungsstellung gleichzeitig von dem Zapfventilrohr beaufschlagt sind und sowohl das Zapfventilrohr mit dem größeren als auch ein solches mit dem kleinsten erlaubten Durchmesser wenigstens in der Entriegelungsstellung des Freigabeschiebers außer Wirkeingriff mit der Anschlagfläche jedes Rastelements ist.

Mit der erfindungsgemäßen Ausgestaltung erreicht man, dass ein den geringsten zulässigen Durchmesser aufweisendes Zapfventilrohr, also insbesondere das Ventilrohr eines PKW-Diesel-Zapfventils, beim Einstecken in den Tankstutzen mit seinem stirnseitigen Rohrende in jedem Fall an der an dem Rastelement ausgebildeten Anschlagfläche zur Anlage kommt, denn der in der zunächst eingenommenen Verriegelungsstellung des Freigabeschiebers vorhandene Durchlassquerschnitt ist etwas kleiner als der Querschnitt dieses (dünnsten zugelassenen) Ventilrohrs. Das Ventilrohr kann deshalb auch dann nicht seitlich neben der Anschlagfläche vorbei geschoben werden, wenn es dicht an dem inneren Umfangsbereich des Durchlasses im Freigabeschieber entlang in die Tankstutzen eingeführt wird. Durch den Kontakt zwischen Ventilrohr und Anschlagfläche wird dann das zugehörige Rastelement zur Freigabe des Freigabeschiebers betätigt. Erfindungsgemäß wird erreicht, dass spätestens dann, wenn der Freigabeschieber die Entriegelungsstellung nach seiner Querverschiebung im Rohrstutzen erreicht, die Anschlagfläche von keinem der vorhandenen Rastelemente mehr von dem stirnseitigen, freien Rand des Ventilrohrs erreicht wird, so dass dieses dann an der/den Anschlagfläche(n) vorbei weiter in den Stutzen eingeführt werden und hierdurch die Verschlussklappe aufdrücken kann.

"Wenig kleiner" oder "etwas kleiner" im Sinne der Erfindung ist dahingehend zu versehen, dass der so definierte Durchlassquerschnitt zwar kleiner als der Querschnitt des kleinsten, zulässigen Zapfventilrohrs, aber mindestens ebenso groß, vorzugsweise größer als der Querschnitt eines nicht zugelassenen, noch dünneren Zapfventilrohrs ist, insbesondere also eines Rohrs von einem Benzin-Zapfventil. Wenn ein solches, nicht zugelassenes Benzin-Zapfventil in den Tankstutzen eingesteckt wird, ist es zwar möglich, dass mit diesem die Anschlagfläche am Rastelement kontaktiert und hierdurch auch das Rastelement betätigt und dadurch der Freigabeschieber zunächst entriegelt wird. Sobald aber anschließend das zu dünne Zapfventil quer zu seiner Einsteckrichtung bewegt wird, um den Schieber seitlich in seine Entriegelungsstellung zu bringen, rutscht das Ventilrohr von der Anschlagfläche ab und das Rastelement bewegt sich zurück in seine ursprüngliche Position und blockiert den Freigabeschieber wieder, bevor dieser vom Ventilrohr seitlich berührt und hierdurch quer verschoben werden kann.

Da die Anschlagfläche so ausgestaltet ist, dass sie in der Verriegelungsstellung des Freigabeschiebers auch von dem Ventilrohr eines größeren Zapfventils betätigbar ist, insbesondere also eines LKW-Diesel-Zapfventils, und da insbesondere sichergestellt ist, dass auch ein solches größtmögliches, zugelassenes Zapfventilrohr einen Querschnitt aufweist, der jedenfalls in der Entriegelungsstellung des Freigabeschiebers nicht größer ist als der sich dann einstellende Durchlassquerschnitt zwischen dem Umfangsabschnitt des Durchlasses, an dem das Ventilrohr zur Querverstellung des Freigabeschiebers anliegt, und dem radial nach innen ragenden Ende der Anschlagfläche am Rastelement, ist auch mit einem solchen, einen großen Kraftstoffdurchfluss ermöglichenden großen Zapfventil ein zuverlässiges Öffnen des Tankverschlusses möglich.

In vorteilhafter Weiterbildung der Erfindung ist vorgesehen, dass die Sicherungseinrichtung zwei Rastelemente mit je einer Anschlagfläche aufweist, die im Wesentlichen von einander gegenüberliegenden Seiten in den Durchlass im Freigabeschieber ragen. Dabei ist die Anordnung vorzugsweise so getroffen, dass die beiden Rastelemente unabhängig voneinander betätigbar sind, und dass zur Entriegelung des Freigabeschiebers aus der Verriegelungsstellung sich beide Rastelemente in ihrer zweiten, betätigten Position befinden müssen. Mit dieser Ausgestaltung wird die Sicherheit des Fehlbetankungsschutzes noch weiter verbessert, denn eine zeitgleiche Betätigung von beiden Rastelementen ist mit einem nicht zugelassenen, zu kleinen Zapfventil praktisch nicht zu erreichen.

Zweckmäßig kann jedes Rastelement mit einem Führungszapfen axialverschieblich in einer Axialführung gelagert sein, wobei die Axialführung vorzugsweise einen im Freigabeschieber ausgebildeten Führungsabschnitt umfasst, in den der Führungszapfen in der ersten Position zur Arretierung des Freigabeschiebers in dessen Verriegelungsstellung einfasst und aus dem er in der zweiten Position zu dessen Freigabe vollständig ausgeschoben ist.

Wenn jedes Rastelement eine schräge, zur Anschlagfläche hin geneigte Führungsfläche für das freie Rohrende zumindest des Zapfventilrohrs mit dem kleinsten zugelassenen Rohrdurchmesser aufweist, wird dieses bei Einstecken in den Tankstutzen von der Führungsfläche automatisch geführt/zentriert und gelangt mit seinem vorderen, stirnseitigen Ende sicher in Kontakt mit der Anschlagfläche. Die Führungsfläche kann auch selbst Teil der Anschlagfläche sein, an dem das Zapfventilrohr mit dem größeren zugelassenen Querschnitt zum Verstellen des Rastelements in die zweite Position und damit zum Öffnen der Sicherungseinrichtung zur Anlage kommt.

Erfindungsgemäß kann weiter ein im Rohrstutzen angeordnetes, sich im Wesentlichen von dessen freien Stutzenende bis zur inneren Umfangsfläche am Freigabeschieber erstreckendes Führungselement für das Zapfventilrohr vorgesehen sein, an dem entlang das Zapfventilrohr in den Tankstutzen eingeführt werden kann. Das Führungselement kann vorzugsweise mit dem Rohrstutzen und/oder dem Kraftstofftank elektrisch leitend verbunden sein und so für eine zuverlässige Ableitung von unerwünschten elektrischen Ladungen Sorge tragen. Bevorzugt ist die Anordnung dabei so getroffen, dass die elektrisch leitende Verbindung über das Führungselement erfolgt.

Das Führungselement greift vorzugsweise an seinem einen Ende schwenkbeweglich an einem Randbereich des Freigabeschiebers an und ist an seinem anderen Ende längsverschieblich und/oder schwenkbar im Rohrstutzen gelagert. Es macht dann die seitliche Verschiebebewegung des Freigabeschiebers zur Entriegelung der Verschlussklappe zuverlässig mit.

Das mindestens eine Rastelement, der Freigabeschieber, die Verschlussklappe und/oder das Führungselement ist/sind zweckmäßig entgegen der Wirkung von mindestens einem auf das jeweilige Bauteil wirkenden Rückstellelement betätigbar, so dass die so ausgestatteten Bauteile in ihre jeweilige Ausgangsposition automatisch von dem Rückstellelement zurückgestellt werden, sobald die auf sie mittel- oder unmittelbar durch das Zapfventilrohr erfolgte Einwirkung nicht länger gegeben ist, spätestens also beim bzw. nach dem Herausziehen des Zapfventilrohrs aus dem Tankstutzen. Bei dem jeweiligen Rückstellelement kann es sich um vorzugsweise vorgespannte Federelemente (insbesondere Schrauben-, Druck- Zug- Torsions- und/oder Blattfedern) handeln.

Weitere Merkmale und Vorteile der Erfindung ergeben sich aus der nachfolgenden Beschreibung und der zugehörigen Zeichnung, worin eine bevorzugte Ausführungsform der Erfindung anhand eines Beispiels dargestellt und beschrieben ist. Es zeigt:
- **Fig. 1**: einen Tankstutzenverschluss nach der Erfindung für einen LKW-Kraftstofftank mit darin eingestecktem Zapfventilrohr, in einer perspektivischen Darstellung;
- **Fig. 2**: den Verschluss nach Fig.1 im Vertikalschnitt durch dessen Längsmittelebene und ohne das Zapfventilrohr;
- **Fig. 3**: den in dem Verschluss angeordneten Fehlbetankungsschutz in einer perspektivischen Darstellung;
- **Fig. 4 A,B**: den Gegenstand der Fig.2 mit eingestecktem Zapfventilrohr mit kleinerem Rohrquerschnitt in zwei verschiedenen Einsteckpositionen;
- **Fig. 5 A,B**: den Gegenstand der Fig. 4 in einer anderen Schnittebene V-V in Fig.3 mit lediglich schematisch angedeutetem Zapfventilrohr;
- **Fig. 6 A,B**: den erfindungsgemäßen Verschluss mit eingestecktem Zapfventilrohr mit größerem Rohrquerschnitt in zwei verschiedenen Einsteckpositionen in einer Fig.5 entsprechenden Darstellung; und
- **Fig. 7 A,B**: einen Horizontalschnitt durch den Fehlbetankungsschutz des Verschlusses längs der Linie VII-VII in Fig.2 in zwei verschiedenen Positionen des Freigabeschiebers.

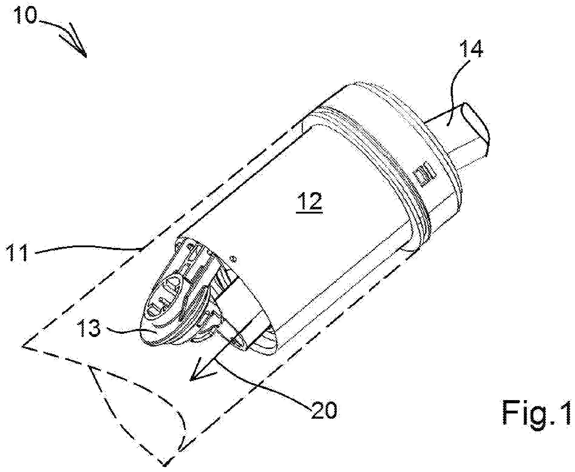

In der Fig. 1 ist mit 10 in seiner Gesamtheit ein Tankstutzenverschluss für einen LKW-Dieselkraftstofftank (nicht dargestellt) bezeichnet, dessen Tankfüllrohr 11 in der Zeichnung zur Illustration der Einbausituation des Tankstutzenverschlusses 10 gestrichelt dargestellt ist. Der Tankstutzenverschluss 10 weist einen in einem Rohrstutzen 12 angeordneten Fehlbetankungsschutz auf, von dem in der Fig. 1 im Wesentlichen nur eine Verschlussklappe 13 zu sehen ist, die von einem in den Rohrstutzen eingesteckten Zapfventilrohr 14 geöffnet und in der geöffneten Position gehalten ist.

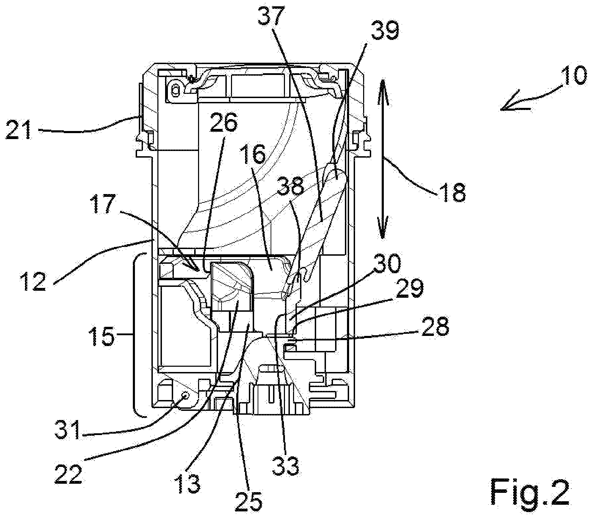

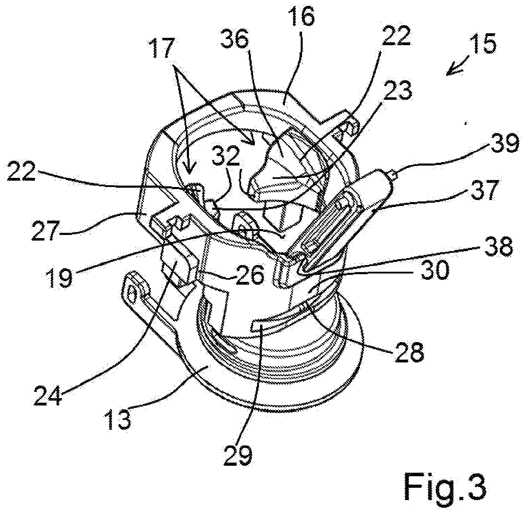

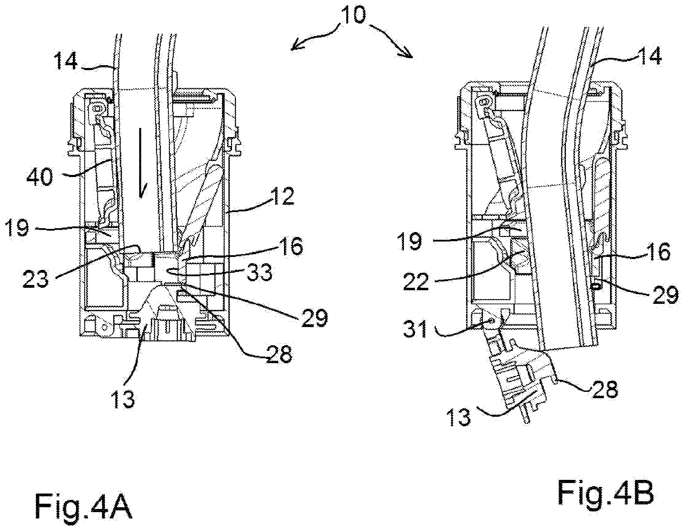

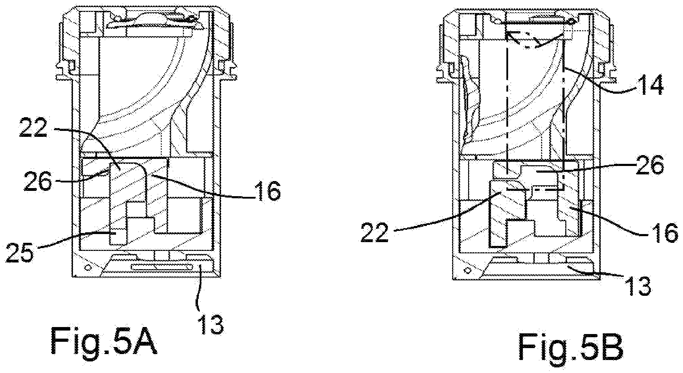

Fig. 2 zeigt den Tankstutzenverschluss 10 und den darin angeordneten, in seiner Gesamtheit mit 15 bezeichneten Fehlbetankungsschutz im Vertikalschnitt durch die Längsmittelebene des Verschlusses. Die Baueinheit des Fehlbetankungsschutzes 15 ist darüber hinaus in der Fig. 3 in perspektivischer Darstellung gut zu erkennen. Wie man sieht, umfasst der Fehlbetankungsschutz neben der Verschlussklappe 13 einen im Wesentlichen aus einem Freigabeschieber 16 und einer Sicherungseinrichtung 17 bestehenden Verriegelungsmechanismus, der von dem Zapfenventilrohr 14 entriegelbar ist und der die Verschlussklappe entweder in ihrer geschlossenen Position verriegelt oder im vom Zapfventilrohr entriegelten Zustand zur Öffnung freigibt, so dass das Ventilrohr 14 an der Verschlussklappe vorbei in das Tankfüllrohr 11 eingeschoben werden kann. Der Freigabeschieber 16 ist quer zur Axialrichtung 18 des Rohrstutzens 12 aus einer Verriegelungsstellung (vgl. insbesondere Fig. 2, Fig. 4A, 5A, 6A, 7A) in eine Entriegelungsstellung (Fig. 4B, 5B, 6B, 7B) im Rohrstutzen 12 verschiebbar gelagert. Er weist einen Durchlass 19 für das Zapfventilrohr 14 auf, so dass dieses durch den Freigabeschieber 16 hindurch hin zu der in seiner Einsteckrichtung 20 dahinter gelegenen Verschlussklappe 13 durchgeschoben werden kann, wenn sich der Freigabeschieber 16 in seiner Entriegelungsstellung befindet.

Die Sicherungseinrichtung 17 kann in der Axialrichtung 18 des Rohrstutzens von dem Zapfventilrohr 14 betätigt werden, wenn dieses vom freien Ende 21 des Rohrstutzens in diesen ein Stück weit eingeschoben wird. Erfindungsgemäß weist die Sicherungseinrichtung 17 hierzu zwei Rastelemente 22 auf, die jeweils mit einer Anschlagfläche 23 versehen sind, die sich im Wesentlichen quer zur Einsteckrichtung 20 des Zapfventilrohrs 14 in Radialrichtung nach innen in den Durchlass 19 im Freigabeschieber 16 erstrecken. Die beiden Rastelemente 22 sind jeweils mit einem Führungszapfen 24 versehen, mit dem sie axial verschieblich in einer Axialführung im Rohrstutzen 12 bzw. dem in diesem angeordneten Fehlbetankungsschutz 15 gelagert sind. Diese Axialführung 25 umfasst jeweils auch einen Führungsabschnitt 26 in den den Durchlass 19 umfangsseitig begrenzenden Wandbereichen 27 des Freigabeschiebers 16. Die Anordnung ist so getroffen, dass jedes der beiden Rastelemente 22 unabhängig vom jeweils anderen mittels einer (in den Zeichnungen nicht dargestellten) Druckfeder von unten nach oben vorgespannt ist und somit in einer ersten Position der Sicherungseinrichtung in den jeweils zugeordneten Führungsabschnitt 26 im Freigabeschieber 16 einfasst und hierdurch diesen in seiner Verriegelungsstellung arretiert, also verhindert, dass der Freigabeschieber seitlich zur Freigabe der Verschlussklappe verschoben werden kann. Wenn die beiden Rastelemente 22 entgegen der Wirkung der (nicht dargestellten) Druckfedern soweit in Einsteckrichtung 20 des Zapfventilrohrs 14 in Richtung auf das verschlussklappenseitige Ende des Rohrstutzens eingeschoben sind, dass die Führungszapfen 24 nicht länger in die zugehörigen Führungsabschnitte 26 im Freigabeschieber 16 einfassen, ist dessen Verriegelung aufgehoben, so dass er seitlich in seine Entriegelungsstellung quer zur Axialrichtung des Rohrstutzens verstellt werden kann. Bei dieser Verstellbewegung aus der Verrielungsstellung in die Entriegelungsstellung, bei der sich der gesamte Freigabeschieber 16 quer im Rohrstutzen 12 bewegt, gelangt eine an der Oberseite der Verschlussklappe 13 ausgebildete Schließnase 28 außer Eingriff mit einer an diese angepasste Schlossnut 29, die an einem nach unten, in Richtung auf die Verschlussklappe vorstehenden Umfangswandbereich 30 des Freigabeschiebers ausgebildet ist. Sobald der Freigabeschieber vollständig in seine Entriegelungsstellung verstellt ist und die Schließnase somit nicht länger in die Schlossnut einfasst, kann die Verschlussklappe 13 entgegen der Wirkung einer auf der Klappenachse 31 angeordneten, nicht weiter dargestellten Torsionsfeder nach unten aufgeschwenkt werden, um den Befüllvorgang des Kraftstofftanks mit Kraftstoff zu ermöglichen.

Erfindungsgemäß ermöglicht der Tankstutzenverschluss 10 eine Betankung des Kraftstofftanks mit Zapfventilen, deren Ventilrohre 14 verschieden große Durchmesser (Querschnitte) aufweisen können. Konkret soll es mit dem erfindungsgemäßen Tankstutzenverschluss möglich sein, den Kraftstofftank mittels eines LKW-Diesel-Zapfventils mit großem Rohrdurchmesser (D=32 mm) und alternativ mit einem PKW-Diesel-Zapfventil mit kleinerem Durchmesser (d=23,6 mm) zu befüllen und demgemäß den im Verschluss vorgesehenen Fehlbetankungsschutz 15 mit Rohren dieser beiden Durchmesser aufzuheben, andererseits aber auch zu verhindern, dass der Tank mittels eines Benzin-Zapfventils zu öffnen, welches grundsätzlich einen noch kleineren Durchmesser als ein PKW-Diesel-Zapfventil aufweist. Um dieser Anforderung gerecht zu werden, sind die Rastelemente 22 mit ihren Anschlagflächen 23 an den Querschnitt der beiden verschieden dicken, zugelassenen Zapfventilrohre eines LKW-Zapfventils und eines PKW-Zapfventils für

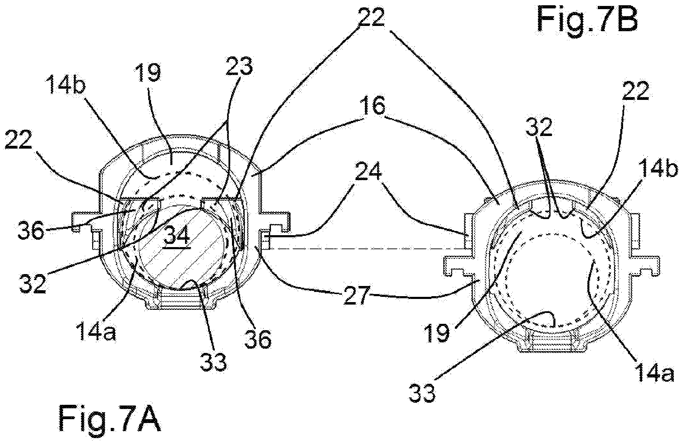

Dieselkraftstoff angepasst, wobei diese beiden Querschnitte in der Fig. 7 durch die gestrichelten Kreislinien 14a (für das PKW-Diesel-Zapfventilrohr) und 14b (für das LKW-Zapfrohr) angedeutet sind. Man erkennt dort insbesondere in Fig. 7A, dass die beiden Anschlagflächen 13 so ausgebildet sind, dass ihre in den Durchlass 19 etwa radial hineinragenden freien Enden 32 zusammen mit einem inneren Umfangsbereich 33 des Durchlasses 19 einen Durchlassquerschnitt 34 definieren, der in Fig. 7A schraffiert dargestellt ist und der in der dort gezeigten Verriegelungsposition des Freigabeschiebers 16, in dem die Führungszapfen 24 der Rastelemente 22 noch in die zugehörigen Führungsabschnitte 26 im Freigabeschieber 16 einfassen, etwas kleiner ist als der Querschnitt des dünneren 14a der beiden zugelassenen Zapfenventilrohre. Dies hat zur Folge, dass das Zapfenventilrohr 14a des PKW-Diesel-Zapfventils beim Einstecken in den Rohrstutzen des Tankstutzenverschlusses mit seinem offenen, stirnseitigen Ende in jedem Fall in Kontakt mit den beiden Anschlagflächen 23 der Rastelemente 22 kommt und diese zum Entriegeln entgegen der Wirkung der Druckfedern nach unten aus den Führungsabschnitten 26 im Freigabeschieber verstellen kann. Beim anschließenden Ausführen der Freigabebewegung wird das am inneren Umfangsbereich 33 im Durchlass 19 des Freigabeschiebers anliegende Zapfventilrohr 14 quer zur Axialrichtung des Rohrstutzens bewegt und verschiebt hierdurch den Schieber 16 in seine Entriegelungsstellung. Dabei gleitet das zunächst noch auf den Anschlagflächen 23 aufsitzende, die Rastelemente 22 in ihre zweite, entriegelnde Position eindrückende Tankstutzenende von den Anschlagflächen seitlich ab, wobei dann allerdings der Freigabeschieber schon so weit seitlich verstellt ist, dass die Führungszapfen 24 der Rastelemente nicht mehr von den Druckfedern von unten in die Führungsabschnitte 26 wieder eingerastet werden können, da diese bereits nicht mehr mit dem Führungszapfen fluchten. Die Rastelemente werden also auf dem weiteren Verschiebeweg des Freigabeschiebers von den unteren Stirnflächen der Umfangswände 27 in ihrer unteren, offenen Position gehalten.

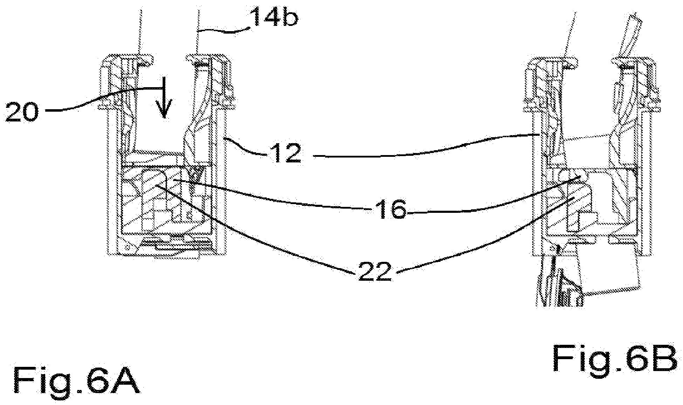

Wie man Fig. 7 weiter gut entnehmen kann, gelangt natürlich auch das Ventilrohr 14b eines LKW-Diesel-Zapfventils immer zuverlässig in Kontakt mit den Anschlagflächen 23 der Rastelemente 22, wobei auch bei einem solchen, einen großen Querschnitt aufweisenden Ventilrohr der Durchlassquerschnitt 34 zwischen den freien Enden 32 der beiden Anschlagflächen und dem inneren Umfangbereich 33 des Durchlasses 19 bei der Bewegung des Freigabeschiebers in die Entriegelungsposition sich zunehmend vergrößert und in der Endstellung (Fig. 7B) in jedem Fall größer ist als der Querschnitt des LKW-Zapfventilrohrs 14b, so dass dieses an den Rastelementen 22 vorbei nach unten in Richtung auf die Verschlussklappe 13 weiter eingesteckt werden kann und diese dann in ihre offene Stellung verschwenkt, wie dies in Fig. 6B gezeigt ist.

Die eine korrekte Positionierung des Zapfventilrohrs auf den Anschlagflächen 23 der Rastelemente 22 zu erleichtern, sind an diesen schräge, zur jeweiligen Anschlagfläche 23 hin geneigte Führungsflächen 36 vorgesehen, die das in den Rohrstutzen eingeführte Zapfventilrohr 14 zentrierend zwischen sich so führen, dass es in Richtung auf den inneren Umfangsbereich des Durchlasses positioniert wird. Bei dem gezeigten Ausführungsbeispiel sind die Führungsflächen lediglich bei einem Zapfventil des geringeren, zugelassenen Durchmessers wirksam, während sich die Anschlagflächenbereiche für das Zapfventil größeren Durchmessers tatsächlich noch oberhalb der Führungsflächen, also in Einsteckrichtung 20 vor diesen befinden.

In den Fig. 2 und 3 kann man gut erkennen, dass in dem Rohrstutzen 12 ein sich im Wesentlichen von dessen oberen, freien Stutzenende schräg nach unten erstreckendes Führungselement 37 angeordnet ist, das mit seinem unteren Ende schwenkbar am oberen Rand 38 des Freigabeschiebers 16 oberhalb von dessen inneren Umfangsbereich 33 schwenkbeweglich angreift. An diesem Führungselement 37 kann das Zapfventilrohr 14 entlang nach unten in den Rohrstutzen eingeschoben werden, wobei das Führungselement zuverlässig dafür sorgt, dass das offene, freie Ende des Ventilrohrs genau in den Durchlass 19 im Freigabeschieber 16 einfasst, wie man dies insbesondere in Fig. 4A gut erkennen kann. Wenn dann von dem Zapfventilrohr die Sicherungseinrichtung 17 durch Eindrücken der beiden Rastelemente 22 nach unten geöffnet ist und der Freigabeschieber 16 von dem Zapfventilrohr quer zur Einsteckrichtung 20 im Rohrstutzen verstellt wird, um die untere Verschlussklappe 13 zu entriegeln, schwenkt das Führungselement 37 um den oberen Rand 38 und sein oberes Ende 39 verschiebt sich ein Stück weit nach oben, so dass das Führungselement in der Entriegelungsstellung dann dicht an der Innenwand des Rohrstutzens 12 anliegt, wie man dies besonders gut in Fig. 4B erkennen kann.

In an sich bekannter Weise weist der erfindungsgemäße Tankstutzenverschluss 10 noch eine einlassseitig angeordnete, obere Verschlussklappe 40 auf, die ähnlich wie die Verschlussklappe 13 von einer (nicht dargestellten) Torsionsfeder normalerweise in ihrer in Fig. 2 dargestellten, geschlossenen Position gehalten wird und die von dem Zapfventilrohr einfach aufgedrückt wird und dabei um seine Klappenachse 41 verschwenkt, wenn das Ventilrohr in den Rohrstutzen eingeführt wird. Die obere Verschlussklappe 40 legt sich dann am Außenumfang des Zapfventilrohrs in dem Umfangsbereich an, der dem Bereich gegenüber liegt, welcher an dem Führungselement 37 entlang nach unten in den Rohrstutzen gleitet und dann an den inneren Umfangsbereich 33 des Durchlasses 19 im Freigabeschieber gelangt. Das Zapfventilrohr erhält auf diese Weise eine zusätzliche, es gegen das Führungselement 37 bzw. im Weiteren gegen den inneren Umfangsbereich im Freigabeschieber leitende Zentrierung.

Die Erfindung ist nicht auf das dargestellte und beschriebene Ausführungsbeispiel beschränkt, sondern es sind verschiedene Änderungen und Ergänzungen denkbar, ohne den Rahmen der Erfindung zu verlassen. So ist es nicht unbedingt erforderlich, dass die Sicherungseinrichtung wie in dem Ausführungsbeispiel zwei Rastelemente mit Anschlagflächen aufweist, vielmehr kann die Erfindung auch mit lediglich einem Rastelement verwirklicht werden, das dann vorzugsweise radial gegenüber dem Umfangsbereich im Durchlass des Freigabeschiebers angeordnet ist, gegen den das Zapfventilrohr zum Öffnen des Freigabeschiebers in die Entriegelungsposition gedrückt wird. Für die Erfindung kommt es im Wesentlichen darauf an, dass der Durchlassquerschnitt für das Zapfventilrohr, welcher definiert wird durch einerseits das freie Ende der in den Durchlass ragenden Anschlagfläche(n) und andererseits durch den inneren Umfangsbereich des Durchlasses, an den sich das Zapfventilrohr zum Aufschieben des Freigabeschiebers anlegt, variabel ist und in der Verriegelungsposition des Freigabeschiebers an den Querschnitt des dünnsten zugelassenen Zapfventilrohrs dergestalt angepasst ist, dass der Durchlassquerschnitt etwas kleiner ist als der Querschnitt des dünnsten, zugelassenen Zapfventilrohrs, während er in der Entriegelungsposition so groß bemessen ist, dass auch ein Zapfventilrohr mit größerem Querschnitt an der Anschlagfläche des mindestens einen Rastelements vorbei vollständig in den Rohrstutzen eingeschoben werden und hierdurch die Verschlussklappe öffnen kann.

## Patentansprüche

1. Tankstutzenverschluss für einen Kraftstofftank, mit einem in einem Rohrstutzen (12) eines Tankfüllrohrs (11) angeordneten Fehlbetankungsschutz (15), der eine Verschlussklappe (13) sowie einen mittels eines Zapfventilrohrs (14) für Kraftstoff entriegelbaren Verriegelungsmechanismus für die Verschlussklappe (13) aufweist, wobei der Verriegelungsmechanismus umfasst:
- einen quer zur Axialrichtung (18) des Rohrstutzens (12) aus einer Verriegelungsstellung in eine Entriegelungsstellung verstellbaren Freigabeschieber (16), der einen Durchlass (19) für das Zapfventilrohr (14) hin zu der in dessen Einsteckrichtung (20) dahinter gelegenen Verschlussklappe (13) aufweist;
- mindestens eine in der Axialrichtung (18) des Rohrstutzens (12) von dem Zapfventilrohr (14) betätigbare Sicherungseinrichtung (17), die in einer ersten, vom Zapfventilrohr (14) unbetätigten Position den Freigabeschieber (16) in seiner Verriegelungsstellung arretiert und in einer zweiten, vom Zapfventilrohr (14) in der Axialrichtung betätigten Position den Freigabeschieber (16) zu dessen Verstellung in die Entriegelungsstellung freigibt, wobei die Sicherungseinrichtung (17) wenigstens ein Rastelement (22) mit einer Anschlagfläche (23) aufweist, die sich im Wesentlichen quer zur Einsteckrichtung (20) in Radialrichtung in den Durchlass (19) im Freigabeschieber (16) erstreckt und die an den Querschnitt von mindestens zwei verschieden dicken, zugelassenen Zapfventilrohren (14a, 14b) angepasst ist, wobei ein von einem freien Ende (32) der in den Durchlass (19) ragenden Anschlagfläche (23) und einem inneren Umfangsbereich (33) des Durchlasses (19) definierter Durchlassquerschnitt (34) in der Verriegelungsposition des Freigabeschiebers (16) wenig kleiner ist als der Querschnitt des dünnsten zugelassenen Zapfventilrohrs (14a) und der Durchlassquerschnitt in der Entriegelungsposition mindestens so groß ist wie der Querschnitt des größten zugelassenen Zapfventilrohrs (14b) **dadurch gekennzeichnet, dass** die Anschlagfläche (23) an dem mindestens einen Rastelement (22) so beschaffen ist, dass sie in der Verriegelungsstellung sowohl von einem Zapfventilrohr (14b) mit einem größeren erlaubten Rohrdurchmesser als auch einem solchen (14a) mit einem kleinsten erlaubten Rohrdurchmesser kontaktierbar ist, wobei die Anschlagfläche(n) (23) und der Freigabeschieber (16) wenigstens am Beginn von dessen Verstellweg aus der Verriegelungsstellung gleichzeitig von dem Zapfventilrohr (14) beaufschlagt sind und das Zapfventilrohr (14) sowohl mit dem größeren als auch mit dem kleinsten erlaubten Durchmesser wenigstens in der Entriegelungsstellung des Freigabeschiebers (16) außer Wirkeingriff mit der Anschlagfläche (23) jedes Rastelements (22) ist.

2. Tankstutzenverschluss nach Anspruch 1, **dadurch gekennzeichnet, dass** die Sicherungseinrichtung (17) zwei Rastelemente (22) mit je einer Anschlagfläche (23) aufweist, die im Wesentlichen von einander gegenüberliegenden Seiten in den Durchlass (19) im Freigabeschieber (16) ragen.

3. Tankstutzenverschluss nach Anspruch 2, **dadurch gekennzeichnet, dass** die beiden Rastelemente (22) unabhängig voneinander betätigbar sind, und dass zur Entriegelung des Freigabeschiebers (16) aus der Verriegelungsstellung sich beide Rastelemente (22) in ihrer zweiten, betätigten Position befinden müssen.

4. Tankstutzenverschluss nach einem der Ansprüche 1 bis 3, **dadurch gekennzeichnet, dass** jedes Rastelement (22) mit einem Führungszapfen (24) axialverschieblich in einer Axialführung (25) gelagert ist.

5. Tankstutzenverschluss nach Anspruch 4, **dadurch gekennzeichnet, dass** die Axialführung (25) einen im Freigabeschieber (16) ausgebildeten Führungsabschnitt (26) umfasst, in den der Führungszapfen (24) in der ersten Position zur Arretierung des Freigabeschiebers (16) in dessen Verriegelungsstellung einfasst und aus dem er in der zweiten Position zu dessen Freigabe vollständig ausgeschoben ist.

6. Tankstutzenverschluss nach einem der Ansprüche 1 bis 5, **dadurch gekennzeichnet, dass** jedes Rastelement (22) eine schräge, zur Anschlagfläche hin geneigte Führungsfläche (36) für das freie Rohrende des Zapfventilrohrs (14) aufweist.

7. Tankstutzenverschluss nach einem der Ansprüche 1 bis 6, **gekennzeichnet durch** ein im Rohrstutzen (12) angeordnetes, sich im Wesentlichen von dessen freien Stutzenende bis zum inneren Umfangsbereich (33) am Freigabeschieber (16) erstreckendes Führungselement (37) für das Zapfventilrohr (14).

8. Tankstutzenverschluss nach einem der Ansprüche 1 bis 7, **dadurch gekennzeichnet, dass** das Führungselement (37) mit dem Rohrstutzen (12) und/oder dem Kraftstofftank (11) elektrisch leitend verbunden ist.

9. Tankstutzenverschluss nach Anspruch 8, **dadurch gekennzeichnet, dass** die elektrisch leitende Verbindung über das Führungselement (37) erfolgt.

10. Tankstutzenverschluss nach einem der Ansprüche 7 bis 9, **dadurch gekennzeichnet, dass** das Führungselement (37) an seinem einen Ende schwenkbeweglich an einem Randbereich (38) des Freigabeschiebers (16) angreift und an seinem anderen Ende längsverschieblich und/oder schwenkbar im Rohrstutzen (12) gelagert ist.

11. Tankstutzenverschluss nach einem der Ansprüche 1 bis 10,
**dadurch gekennzeichnet, dass** das mindestens eine Rastelement (22), der Freigabeschieber (16), die Verschlussklappe (13) und/oder das Führungselement (37) entgegen der Wirkung von mindestens einem auf das jeweilige Bauteil wirkenden Rückstellelement betätigbar ist/sind.

## Claims

1. Tank filler neck closure for a fuel tank, having a device (15) for protecting against incorrect fuelling, said device being arranged in a tube filler neck (12) of a tank filling tube (11) and having a closure flap (13) and a locking mechanism, which can be unlocked by means of a nozzle tube (14) for fuel, for the closure flap (13), wherein the locking mechanism comprises:
- a release slide (16) which can be moved transversely to the axial direction (18) of the tube filler neck (12) from a locking position into an unlocking position and which has a passage (19) for the nozzle tube (14) to the closure flap (13) placed behind the slide in the insertion direction (20) of said slide,
- at least one securing device (17) that can be actuated in the axial direction (18) of the tube filler neck (12) by the nozzle tube (14), and, in a first position in which the securing device is not actuated by the nozzle tube (14), locks the release slide (16) in the release slide locking position and, in a second position in which the securing device is actuated by the nozzle tube (14) in the axial direction, releases the release slide (16) in order to move same into the unlocking position, **wherein** the securing device (17) has at least one latching element (22) with a stop surface (23) which extends into the passage (19) substantially transversely to the insertion direction (20) in the release slide (16) in a radial direction and which is adapted to the cross-section of at least two permissible nozzle tubes (14a, 14b) with different thicknesses, wherein a passage cross-section (34) which is defined by the free end (32) of the at least one stop surface (23) protruding into the passage (19) and by an internal circumferential region (33) of the passage (19) is a little smaller than the cross-section of the thinnest permissible nozzle tube (14a) in the locking position of the release slide (16), and the passage cross-section is at least as large as the cross-section of the largest permissible nozzle tube (14b) in the unlocking position, **characterised in that** the stop surface (23) on the at least one latching element (22) is such that, in the locking position, it can be contacted both by a nozzle tube (14b) with a larger permissible tube diameter and by such a nozzle tube (14a) with a smallest permissible tube diameter, wherein the stop surface (n) (23) and the release slide (16) are simultaneously acted upon by the nozzle tube (14) at least at the beginning of the displacement path thereof from the locking position and the nozzle tube (14) with both the larger and the smallest permissible diameter is out of operative engagement with the stop surface (23) of each latching element (22) at least when the release slide (16) is in the unlocking position.

2. Tank filler neck closure according to claim 1, **characterised in that** the securing device (17) has two latching elements (22), each with a stop surface (23), which protrude into the passage (19) in the release slide (16) substantially from opposite sides.

3. Tank filler neck closure according to claim 2, **characterised in that** the two latching elements (22) can be actuated independently of one another, and **in that**, in order to unlock the release slide (16) from the locking position, both latching elements (22) must be in their second, actuated position.

4. Tank filler neck closure according to any of claims 1 to 3, **characterised in that** each latching element (22) is mounted in an axially displaceable manner in an axial guide (25) by means of a guide pin (24).

5. Tank filler neck nozzle closure according to claim 4, **characterised in that** the axial guide (25) comprises a guide section (26) which is formed in the release slide (16) and into which the guide pin (24) engages in the first position for locking the release slide (16) in its locking position and from which said guide pin is completely pushed out in the second position in order to be released.

6. Tank filler neck closure according to any of claims 1 to 5, **characterised in that** each latching element (22) has an inclined guide surface (36), which is inclined towards the stop surface, for the free tube end of the nozzle tube (14).

7. Tank filler neck closure according to any of claims 1 to 6, **characterised by** a guide element (37) for the nozzle tube (14), which guide element is arranged in the tube filler neck (12) and extends substantially from the free filler neck end thereof to the inner circumferential region (33) on the release slide (16).

8. Tank filler neck closure according to any of claims 1 to 7, **characterised in that** the guide element (37) is electrically conductively connected to the tube filler neck (12) and/or the fuel tank (11).

9. Tank filler neck closure according to claim 8, **characterised in that** the electrically conductive connection is made via the guide element (37).

10. Tank filler neck closure according to any of claims 7 to 9, **characterised in that** the guide element (37) engages at one of its ends in a pivotally movable manner on an edge region (38) of the release slide (16) and is mounted at its other end in a longitudinally displaceable and/or pivotable manner in the tube filler neck (12).

11. Tank filler neck closure according to any of claims 1 to 10, **characterised in that** the at least one latching element (22), the release slide (16), the closure flap (13) and/or the guide element (37) is/are actuatable counter to the action of at least one restoring element acting on the respective component.

## Revendications

1. Fermeture de col de remplissage pour un réservoir de carburant, avec une protection contre les erreurs de remplissage (15) agencée dans un col de tube (12) d'un tube de remplissage de réservoir (11), lequel présente un clapet de fermeture (13) ainsi qu'un mécanisme de verrouillage pour le clapet de fermeture (13) pouvant être déverrouillé au moyen d'un tube de soupape de soutirage (14) pour le carburant, dans laquelle le mécanisme de verrouillage comprend :
- un coulisseau de libération (16) déplaçable transversalement à la direction axiale (18) du col de tube (12) d'une position de verrouillage à une position de déverrouillage, qui présente un passage (19) pour le tube de soupape de soutirage (14) vers le clapet de fermeture (13) situé derrière dans la direction d'enfichage (20) de celui-ci ;
- au moins un dispositif de sécurité (17) pouvant être actionné dans la direction axiale (18) du col de tube (12) par le tube de soupape de soutirage (14), qui, dans une première position non actionnée par le tube de soupape de soutirage (14), bloque le coulisseau de libération (16) dans sa position de verrouillage et, dans une seconde position actionnée par le tube de soupape de soutirage (14) dans la direction axiale, libère le coulisseau de libération (16) pour permettre son déplacement dans la position de déverrouillage, **dans laquelle** le dispositif de sécurité (17) présente au moins un élément d'encliquetage (22) avec une surface de butée (23) qui s'étend sensiblement transversalement à la direction d'insertion (20) dans la direction radiale dans le passage (19) dans le coulisseau de libération (16) et qui est adaptée à la section transversale d'au moins deux tubes de soupape de soutirage (14a, 14b) d'épaisseurs différentes et homologués, dans laquelle une section transversale de passage (34) définie par une extrémité libre (32) de la surface de butée (23) faisant saillie dans le passage (19) et une zone périphérique intérieure (33) du passage (19) est, dans la position de verrouillage du coulisseau de libération (16), légèrement inférieure à la section transversale du tube de soupape de soutirage homologué le plus fin (14a), et la section transversale de passage dans la position de déverrouillage est au moins aussi grande que la section transversale du tube de soupape de soutirage homologué le plus grand (14b), **caractérisée en ce que** la surface de butée (23) sur le au moins un élément d'encliquetage (22) est conçue de sorte qu'elle peut être mise en contact dans la position de verrouillage aussi bien par un tube de soupape de soutirage (14b) avec un plus grand diamètre de tube autorisé que par un tel tube (14a) avec un plus petit diamètre de tube autorisé, dans laquelle la surface de butée (n) (23) et le coulisseau de libération (16) sont sollicités simultanément par le tube de soupape de soutirage (14) au moins au début de la course de déplacement de celui-ci à partir de la position de verrouillage, et le tube de soupape de soutirage (14) est hors d'engagement actif avec la surface de butée (23) de chaque élément d'encliquetage (22) aussi bien avec le plus grand qu'avec le plus petit diamètre autorisé au moins dans la position de déverrouillage du coulisseau de libération (16).

2. Fermeture de col de remplissage selon la revendication 1, **caractérisée en ce que** le dispositif de sécurité (17) présente deux éléments d'encliquetage (22) avec chacun une surface de butée (23), qui font saillie dans le passage (19) dans le coulisseau de libération (16) sensiblement depuis des côtés opposés l'un à l'autre.

3. Fermeture de col de remplissage selon la revendication 2, **caractérisée en ce que** les deux éléments d'encliquetage (22) peuvent être actionnés indépendamment l'un de l'autre, et **en ce que** pour déverrouiller le coulisseau de libération (16) de la position de verrouillage, les deux éléments d'encliquetage (22) doivent se trouver dans leur seconde position actionnée.

4. Fermeture de col de remplissage selon l'une quelconque des revendications 1 à 3, **caractérisé en ce que** chaque élément d'encliquetage (22) est monté avec un tourillon de guidage (24) de sorte à pouvoir se déplacer axialement dans un guidage axial (25).

5. Fermeture de col de remplissage selon la revendication 4, **caractérisée en ce que** le guidage axial (25) comprend une section de guidage (26) réalisée dans le coulisseau de libération (16), dans laquelle le tourillon de guidage (24) s'engage dans la première position pour bloquer le coulisseau de libération (16) dans sa position de verrouillage et hors de laquelle il est complètement sorti dans la seconde position pour libérer celui-ci.

6. Fermeture de col de remplissage selon l'une quelconque des revendications 1 à 5, **caractérisée en ce que** chaque élément d'encliquetage (22) présente une surface de guidage (36) inclinée vers la surface de butée pour l'extrémité de tube libre du tube de soupape de soutirage (14).

7. Fermeture de col de remplissage selon l'une quelconque des revendications 1 à 6, **caractérisée par** un élément de guidage (37) pour le tube de soupape de soutirage (14), agencé dans le col de tube (12) et s'étendant sensiblement de son extrémité de col libre jusqu'à la zone périphérique intérieure (33) sur le coulisseau de libération (16).

8. Fermeture de col de remplissage selon l'une quelconque des revendications 1 à 7, **caractérisée en ce que** l'élément de guidage (37) est relié de manière électriquement conductrice au col de tube (12) et/ou au réservoir de carburant (11).

9. Fermeture de col de remplissage selon la revendication 8, **caractérisée en ce que** la liaison électriquement conductrice est établie par l'intermédiaire de l'élément de guidage (37).

10. Fermeture de col de remplissage selon l'une quelconque des revendications 7 à 9, **caractérisée en ce que** l'élément de guidage (37) s'engage au niveau de l'une de ses extrémités de sorte à pouvoir pivoter sur une zone de bord (38) du coulisseau de libération (16) et est logé au niveau de son autre extrémité de sorte à pouvoir se déplacer longitudinalement et/ou pivoter dans le col de remplissage (12).

11. Fermeture de col de remplissage selon l'une quelconque des revendications 1 à 10, **caractérisée en ce que** l'au moins un élément d'encliquetage (22), le coulisseau de libération (16), le clapet de fermeture (13) et/ou l'élément de guidage (37) peut/peuvent être actionné(s) en opposition à l'action d'au moins un élément de rappel agissant sur le composant respectif.
